# EUROPEAN PATENT SPECIFICATION

(11) **EP 3 778 115 B1**
(45) Date of publication and mention of the grant of the patent: **27.04.2022**
(21) Application number: 19887912.4
(22) Date of filing: 19.11.2019
(51) Int. Cl.: B23Q 3/155, B23Q 17/00

(54) **AUTOMATIC TOOL EXCHANGING DEVICE USING AGV AS CARRYING DEVICE**
AUTOMATISCHE WERKZEUGWECHSELVORRICHTUNG MIT AGV ALS TRAGVORRICHTUNG
PROCÉDÉ D'ÉCHANGE D'OUTIL AUTOMATIQUE FAISANT INTERVENIR UN VGA EN TANT QU'OUTIL DE TRANSPORT

(30) Priority: 20.11.2018 CN 201811386321
(43) Date of publication of application: 17.02.2021
(73) Proprietor: Shanghai Smartstate Technology Co., Ltd., Shanghai 201306 (CN)
(72) Inventor: LUO, Lei, Shanghai 201306 (CN); CHEN, Kun, Shanghai 201306 (CN); TIAN, Hongfeng, Shanghai 201306 (CN); ZHANG, Gaoming, Shanghai 201306 (CN); ZHANG, Jichang, Shanghai 201306 (CN); LING, Weiguo, Shanghai 201306 (CN)
(74) Representative: Petculescu, Ana-Maria
(86) International application number: PCT/CN2019/119300
(87) International publication number: WO 2020/103808

(56) References cited:
- CN-A- 105 437 204
- CN-A- 106 976 063
- CN-A- 107 283 149
- CN-A- 108 147 035
- CN-A- 108 655 804
- CN-A- 109 333 130
- CN-U- 203 076 986
- CN-U- 206 913 136
- JP-A- S58 211 842
- JP-A- 2001 163 447
- JP-A- 2012 115 934
- US-A- 4 547 955

## Description

### TECHNICAL FIELD

The present invention relates to the field of industrial automation, and in particular, to an automatic tool changer using an automatic guided vehicle (AGV) as a carrier.

### BACKGROUND

Product manufacture is increasingly developing toward high precision, increased efficiency and intelligence due to the deepening of industrialization. Numerical control (NC) machine tools with characteristics of high accuracy, high flexibility, and high-speed processing are widely used in manufacturing processes. A machining center has a tool magazine, which is equipped with various types of tools to adapt to the processing of various products and features. When processing parts in the machining center, a spindle will control the selection of different tools in the tool magazine to process corresponding machinations according to a program. Since different parts have different features, the tools used to process these tasks are also different. When changing production, a batch exchange of tools in the tool magazine is requested.

At present, the change-out of tools in the tool magazine is done manually. Specifically, the tools are removed by hand from the tool magazine and then new tools are manually replaced and installed in the tool magazine. When removing and replacing the tools, since there is limited space for manual operation and there are many tools that need to be replaced, it is further necessary to control a movement of the tool magazine. This is necessary for ease and efficiency of manual tool change-out. Such operations, however, are antithetical to current notions of factory automation and retard the realization of the intelligent unmanned factory.

At present, the market still lacks a device for automatic exchange of the tools in the tool magazine to assist the installation and exchange of the tools. Therefore, it is of practical significance and necessity to develop an improved automatic tool changer.

JPS58211842 relates to a numerically controlled magazine tool having a tool replacement device for replacing a tool that is stored in the tool magazine. The invention includes a tool magazine movable between a tool stocker, provided with a tool carrier having a tool change function between the tool holding function and said tool magazine, the tool stocker in which characterized in that a tool selection means for transferring the tool inner selectively to said tool carrier. The object of the invention is to minimize tools to be stored in a tool magazine by providing a tool conveyor capable of travelling between the tool magazine and a tool stocker so that tools can be exchanged between them. However this document transports single tool to tool stock with fixed angle via indexing device.

### SUMMARY

In view of the defects in the prior art, the present invention aims to provide an automatic tool changer using an AGV as a carrier.

The automatic tool changer using the AGV as the carrier provided by the present invention is capable of removing, installing or replacing a tool, and includes an AGV, a positioning module and a tool changing module. The positioning module and the tool changing module both are arranged on the AGV and the tool changing module includes a tool holder, a tool handle jaw, a positioning pin and a carrier baseboard characterized in that the NC axial motion unit is arranged on the AGV, the carrier baseboard is connected to the NC axial motion unit, and the tool holder is arranged on the carrier baseboard, the tool handle jaw is fixed on the tool holder and the positioning pin is arranged on the tool holder.

Preferably, the positioning module includes a zero-point positioning mechanism; and the zero-point positioning mechanism is arranged on the tool changing module, which can realize three-dimensional positioning of the AGV and/or the tool changing module.

Preferably, the zero-point positioning mechanism is a visual positioning mechanism and can identify a position and/or angle deviation between a position and/or angle, at which the tool changing module is located and a set standard position and/or standard angle, and transmit the position deviation and/or angle deviation as first information.

Preferably, the tool handle jaw is made of a flexible material, and can fix and/or release the tool.

Preferably, the NC axial motion unit has one or more translational degrees of freedom, and/or one or more rotational degrees of freedom.

The NC axial motion unit can utilize its translational and/or rotational degrees of freedom to drive the tool changing module to perform position and/or angle regulation through the carrier baseboard.

Preferably, the automatic tool changer using the AGV as the carrier provided by the present invention further includes a navigation module. The navigation module can control the AGV to move along a set route.

Preferably, the automatic tool changer using the AGV as the carrier provided by the present invention further includes a control module. The control module can receive a first signal and control the NC axial motion unit to regulate the position and/or angle of the tool changing module to the set standard position and/or standard angle according to the first signal under a set condition.

Preferably, the navigation module is integrated in the control module.

Preferably, the navigation module realizes a navigation function through at least one selected from the group consisting of laser navigation, magnetic navigation, optical navigation and inertial navigation.

In comparison with the prior art, the present invention has the following advantages:
1. the automatic tool changer using the AGV as the carrier provided by the present invention has merits of simple device, low cost, high reliability and convenient maintenance, which can effectively improve the degree of automation and production efficiency of production equipment and save manpower and material resources;
2. an exchanging process performed by the automatic tool changer using the AGV as the carrier provided by the present invention is totally controlled by a program, which can avoid occurrence of a phenomenon that a tool is installed in the wrong place of the tool magazine during the tool changing process;
3. as for the automatic tool changer using the AGV as the carrier provided by the present invention, the removed tools are arranged on the carrier in an order in which the tools are removed after the tool changing is finished, which is conducive to tool management; and
4. the automatic tool changer using the AGV as the carrier provided by the present invention can realize a demand of implementing tool exchange on multiple machine tools with one tool changing device, thereby saving costs and having high adaptability.

### BRIEF DESCRIPTION OF THE DRAWINGS

Other features, purposes and advantages of the present invention will become more prominent by reading the detailed description of non-restrictive embodiments that is made with reference to the following figures:

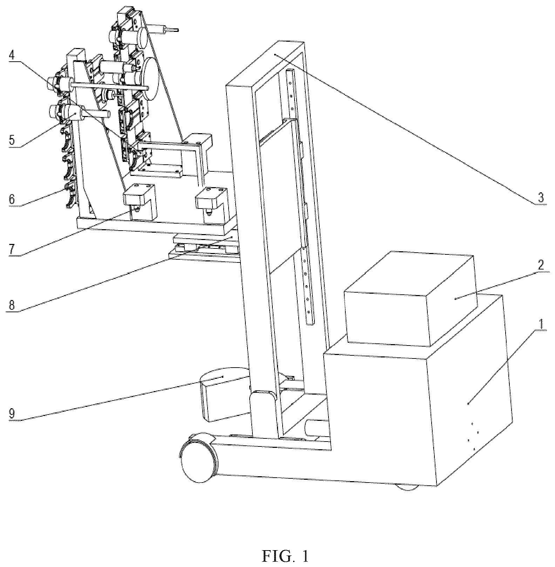

FIG. 1 is a structural schematic diagram of an automatic tool changer using an AGV as a carrier provided by the present invention;

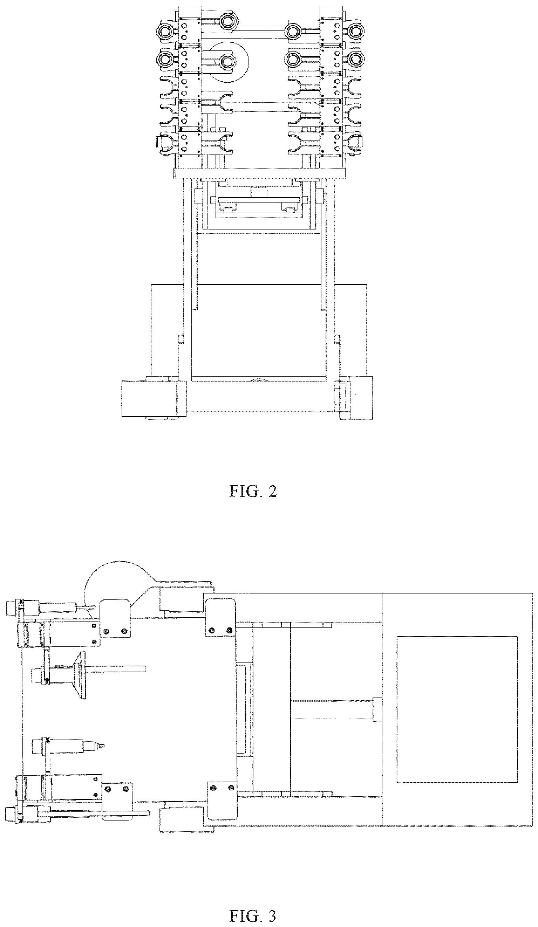

FIG. 2 is a front view of the automatic tool changer using the AGV as the carrier provided by the present invention; and
FIG. 3 is a top view of the automatic tool changer using the AGV as the carrier provided by the present invention.

In the figures:

| AGV 1 | Control Module 2 | NC Axial Motion Unit 3 |
|---|---|---|
| Zero-Point Positioning Mechanism 4 | Tool 5 | Tool Handle Jaw 6 |
| Positioning Pin 7 | Carrier Baseboard 8 | Navigation Module 9 |

### DETAILED DESCRIPTION OF THE EMBODIMENTS

The present invention will be further explained in detail below in conjunction with specific embodiments.

The automatic tool changer using the AGV as the carrier provided by the present invention is capable of removing, installing or replacing the tool 5, and includes the AGV 1, a positioning module and a tool changing module. The positioning module and the tool changing module both are arranged on the AGV 1 and the tool changing module comprises a tool holder, a tool handle jaw 6, a positioning pin 7 and a carrier baseboard 8 characterized in that the NC axial motion unit 3 is arranged on the AGV 1, the carrier baseboard 8 is connected to the NC axial motion unit 3, the tool holder is arranged on the carrier baseboard 8, the tool handle jaw is fixed on the tool holder, the positioning pin 7 is arranged on the tool holder.

Preferably, the positioning module includes the zero-point positioning mechanism 4. The zero-point positioning mechanism 4 is arranged on the tool changing module, which can realize three-dimensional positioning of the AGV 1 and/or the tool changing module. The zero-point positioning mechanism 4 is a visual positioning mechanism, and can identify a position deviation and/or angle deviation between a position and/or angle at which the tool changing module is located and a set standard position and/or standard angle, and transmit the position deviation and/or angle deviation as first information. The tool handle jaw 6 is made of a flexible material, and can fix and/or release the tool 5.

Specifically, the NC axial motion unit 3 has one or more translational degrees of freedom, and/or one or more rotational degrees of freedom.

The NC axial motion unit 3 can utilize its translational and/or rotational degrees of freedom to drive the tool changing module to perform position and/or angle regulation through the carrier baseboard 8. The automatic tool changer using the AGV as the carrier provided by the present invention further includes the navigation module 9; and the navigation module 9 can control the AGV 1 to move along a set route. The automatic tool changer using the AGV as the carrier provided by the present invention further includes the control module 2. The control module can receive a first signal and control the NC axial motion unit 3 to adjust the position and/or angle of the tool changing module to the set standard position and/or standard angle according to the first signal under a set condition. The navigation module 9 is integrated in the control module 2. The navigation module 9 realizes a navigation function through at least one of the group consisting of laser navigation, magnetic navigation, optical navigation and inertial navigation.

More specifically, the control module 2 can communicate with the zero-point positioning mechanism 4 and the NC axial motion unit 3. The zero-point positioning mechanism 4 can identify the position deviation between the position at which the tool changer is located and the standard position and feedback the deviation to the control module 2 in real time. The control module 2 controls the NC axial motion unit 3 to accurately position the automatic tool changer to the corresponding position. The tool handle jaw has a certain flexibility, can fix the tool removed from the spindle under a force of the spindle, and can also release the tool under the force of the spindle when the spindle is coming to retrieve the tool. In order to enable the automatic tool changer to transport as many tools as possible at one time, there are certain requirements for the arrangement of the tool handle jaw on the automatic tool changer, and tools having greater diameters should be concentrated at a place where fewer tool handle jaws are arranged.

Furthermore, the zero-point positioning mechanism 4 is a visual positioning mechanism, and herein, the visual positioning mechanism refers to a mechanism that realizes position correction through image collection, mark identification and standard position mark comparison and includes an image collecting apparatus. In a preferred example of the present invention, the automatic tool changer has a standard position on the machining center, and the standard position is provided with an identification code. In operation, the AGV 1 can carry the automatic tool changer with the tool 5 that needs to be installed to a side of the machining center through navigation and positioning. Subsequently, the NC axial motion unit 3 proceeds to determine a position deviation of a current position relative to the standard position according to the pre-set identification code and send the position deviation back to the control module 2 in real time, and the control module 2 controls a continuous real-time correction of the motion of the NC axial motion unit 3 according to the deviation, and finally, it is positioned to the standard position accurately.

At this moment, it further requires the cooperation of a tool changing mechanism of the machining center. The tool 5 in the tool magazine of the machining center is placed at a tool magazine side of a tool changing site, the spindle goes to the automatic tool changer, cooperates with a handle of the tool 5 and moves. The movement of the spindle enables the tool 5 to be separated from the tool handle jaw since the tool handle jaw has a certain flexibility and transferred to a spindle side of the tool changing site of the machining center along with the spindle. Tool changing manipulators are utilized to grip and exchange the tools 5 at the spindle side and the tool magazine side of the tool changing site. Concurrently, the tool 5 of the initial exchanging device for tool 5 falls at the tool magazine side of the tool changing site, while the tool 5 in the initial tool magazine falls at the spindle. The tool 5 at the tool magazine side of the tool changing site is transferred by the tool magazine to a designated site in the tool magazine, and the tool 5 at the spindle side is transferred by the spindle to the automatic exchanging device for tool 5 and installed on the initial tool handle jaw. The whole movement continues to circulate, and all the tools 5 in the tool magazine can be updated and exchanged.

In the description of the present application, it should be understood that orientations or positional relationships indicated by terms "upward", "downward", "front", "rear", "left", "right", "vertical", "horizontal", "top", "bottom", "in", "out" and so on are orientations and positional relationships shown based on the drawings, merely in order to facilitate the description of the present application and simplify the description, rather than indicating or implying that the device or element referred to must have a specific orientation and be configured or operated in a specific orientation, and thus cannot be understood as limitations of the present application.

## Claims

1. An automatic tool changer using an AGV as a carrier, capable of removing, installing or replacing a tool (5), comprising an AGV (1), a positioning module and a tool changing module; wherein the positioning module and the tool changing module are arranged on the AGV (1) and the tool changing module comprises a tool holder, a tool handle jaw (6), a positioning pin (7) and a carrier baseboard (8);
**characterized in that**
the NC axial motion unit (3) is arranged on the AGV (1); the carrier baseboard (8) is connected to the NC axial motion unit (3); the tool holder is arranged on the carrier baseboard (8); the tool handle jaw (6) is fixed on the tool holder; and the positioning pin (7) is arranged on the tool holder.

2. The automatic tool changer using the AGV as the carrier of claim 1, wherein the positioning module comprises a zero-point positioning mechanism (4); and the zero-point positioning mechanism (4) is arranged on the tool changing module and can realize three-dimensional positioning of the AGV (1) and/or the tool changing module.

3. The automatic tool changer using the AGV as the carrier of claim 2, wherein the zero-point positioning mechanism (4) is a visual positioning mechanism, can identify a position and/or angle deviation between a position and/or angle at which the tool changing module is located and a set standard position and/or angle, and transmits the position deviation and/or angle deviation as first information.

4. The automatic tool changer using the AGV as the carrier of claim 1, wherein the tool handle jaw (6) is made of a flexible material, and can fix and/or release the tool (5).

5. The automatic tool changer using the AGV as the carrier of claim 1, wherein the NC axial motion unit (3) has
one or more translational degrees of freedom, and/or
one or more rotational degrees of freedom; and
the NC axial motion unit (3) can utilize its translational and/or rotational degrees of freedom to drive the tool changing module to perform position and/or angle regulation through the carrier baseboard (8).

6. The automatic tool changer using the AGV as the carrier of any one of claims 1 to 5, further comprising a navigation module (9); wherein the navigation module (9) is able to control the AGV (1) to move along a set route.

7. The automatic tool changer using the AGV as the carrier of claim 6, further comprising a control module (2); wherein the control module is able to receive a first signal, and control the NC axial motion unit (3) to regulate the position and/or angle of the tool changing module to the set standard position and/or angle according to the first signal under a set condition.

8. The automatic tool changer using the AGV as the carrier of claim 7, wherein the navigation module (9) is integrated in the control module (2).

9. The automatic tool changer using the AGV as the carrier of claim 6 or 7, wherein the navigation module (9) realizes a navigation function through at least one of the group consisting of laser navigation, magnetic navigation, optical navigation and inertial navigation.

## Patentansprüche

1. Automatische Werkzeugwechseleinrichtung mit einem AGV als Träger, die ein Werkzeug (5) entfernen, einsetzen oder ersetzen kann, umfassend ein AGV (1), ein Positionierungsmodul und ein Werkzeugwechselmodul; wobei das Positionierungsmodul und das Werkzeugwechselmodul am AGV (1) angeordnet sind und das Werkzeugwechselmodul einen Werkzeughalter, eine Werkzeuggriffbacke (6), einen Positionierungsstift (7) und eine Trägerplatte (8) umfasst;
**dadurch gekennzeichnet, dass**
eine NC-Axialbewegungseinheit (3) am AGV (1) angeordnet ist; die Trägerplatte (8) mit der NC-Axialbewegungseinheit (3) verbunden ist; der Werkzeughalter an der Trägerplatte (8) angeordnet ist; die Werkzeuggriffbacke (6) am Werkzeughalter fixiert ist; und der Positionierungsstift (7) am Werkzeughalter angeordnet ist.

2. Automatische Werkzeugwechseleinrichtung mit AGV als Träger nach Anspruch 1, wobei das Positionierungsmodul einen Nullpunktpositionierungsmechanismus (4) umfasst; und der Nullpunktpositionierungsmechanismus (4) am Werkzeugwechselmodul angeordnet ist und eine dreidimensionale Positionierung des AGV (1) und/oder des Werkzeugwechselmoduls ermöglicht.

3. Automatische Werkzeugwechseleinrichtung mit AGV als Träger nach Anspruch 2, wobei der Nullpunktpositionierungsmechanismus (4) ein visueller Positionierungsmechanismus ist, eine Positions- und/oder Winkelabweichung zwischen einer Position und/oder einem Winkel, in dem das Werkzeugwechselmodul angeordnet ist, und einer eingestellten Standardposition und/oder einem eingestellten Standardwinkel erkennen kann und die Positions- und/oder Winkelabweichung als erste Informationen überträgt.

4. Automatische Werkzeugwechseleinrichtung mit AGV als Träger nach Anspruch 1, wobei die Werkzeuggriffbacke (6) aus einem flexiblen Material hergestellt ist und das Werkzeug (5) fixieren und/oder freigeben kann.

5. Automatische Werkzeugwechseleinrichtung mit AGV als Träger nach Anspruch 1, wobei die NC-Axialbewegungseinheit (3) einen oder mehrere Translationsbewegungsfreiheitsgrade und/oder Rotationsbewegungsfreiheitsgrade aufweist; und
die NC-Axialbewegungseinheit (3) ihre Translations- und/oder Rotationsbewegungsfreiheitsgrade nutzen kann, um das Werkzeugwechselmodul zum Durchführen einer Positions- und/oder Winkelregulierung durch die Trägerplatte (8) anzutreiben.

6. Automatische Werkzeugwechseleinrichtung mit AGV als Träger nach einem der Ansprüche 1 bis 5, ferner umfassend ein Navigationsmodul (9); wobei das Navigationsmodul (9) das AGV (1) auf einer festgelegten Route steuern kann.

7. Automatische Werkzeugwechseleinrichtung mit AGV als Träger nach Anspruch 6, ferner umfassend ein Steuermodul (2); wobei das Steuermodul ein erstes Signal empfangen und die NC-Axialbewegungseinheit (3) gemäß dem ersten Signal unter einer festgelegten Bedingung zum Regulieren der Position und/oder des Winkels des Werkzeugwechselmoduls auf die eingestellte Standardposition und/oder den eingestellten Standardwinkel steuern kann.

8. Automatische Werkzeugwechseleinrichtung mit AGV als Träger nach Anspruch 7, wobei das Navigationsmodul (9) in das Steuermodul (2) integriert ist.

9. Automatische Werkzeugwechseleinrichtung mit AGV als Träger nach Anspruch 6 oder 7, wobei das Navigationsmodul (9) seine Navigationsfunktion durch wenigstens eins aus der Gruppe bestehend aus Lasernavigation, magnetischer Navigation, optischer Navigation und Inertialnavigation erzielt.

## Revendications

1. Un changeur d'outil automatique utilisant un AGV comme transporteur, capable de retirer, d'installer ou de remplacer un outil (5), comprenant un AGV (1), un module de positionnement et un module de changement d'outil ; dans lequel le module de positionnement et le module de changement d'outil sont agencés sur l'AGV (1) et le module de changement d'outil comprend un porte-outil, une pince de manipulation d'outil (6), une goupille de positionnement (7) et une plinthe de transporteur (8);
**caractérisé en ce que**
l'unité de mouvement axial NC (3) est agencée sur l'AGV (1); la plinthe de transporteur (8) est connectée à l'unité de mouvement axial NC (3) ; le porte-outil est agencé sur la plinthe de transporteur (8) ; la pince de manipulation d'outil (6) est fixée sur le porte-outil ; et la goupille de positionnement (7) est agencée sur le porte-outil.

2. Un changeur d'outil automatique utilisant un AGV comme transporteur selon la revendication 1, dans lequel le module de positionnement comprend un mécanisme de positionnement à point zéro (4) ; et le mécanisme de positionnement à point zéro (4) est agencé sur le module de changement d'outil et peu réaliser un positionnement tridimensionnel de l'AGV (1) et/ou du module de changement d'outil.

3. Un changeur d'outil automatique utilisant un AGV comme transporteur selon la revendication 2, dans lequel le mécanisme de positionnement à point zéro (4) est un mécanisme de positionnement visuel, pouvant identifier un écart de position et/ou une déviation angulaire entre une position et/ou un angle auquel le module de changement d'outil est situé et une position standard et/ou un angle défini, et transmet l'écart de position et/ou la déviation angulaire en tant que première information.

4. Un changeur d'outil automatique utilisant un AGV comme transporteur selon la revendication 1, dans lequel la pince de manipulation d'outil (6) est en matériau flexible, et peut fixer et/ou libérer l'outil (5).

5. Un changeur d'outil automatique utilisant un AGV comme transporteur selon la revendication 1, dans lequel l'unité de mouvement axial NC (3) est munie d'un ou de plusieurs degrés translationnels de liberté, et/ou
un ou plusieurs degrés rotationnels de liberté ; et
l'unité de mouvement axial NC (3) peut utiliser ses degrés translationnels et/ou rotationnels de liberté pour conduire le module de changement d'outil à effectuer un ajustement de position et/ou d'angle via la plinthe de transporteur (8).

6. Un changeur d'outil automatique utilisant un AGV comme transporteur selon l'une quelconque des revendications 1-5, comprenant en outre un module de navigation (9) ; dans lequel le module de navigation (9) est capable de commander le déplacement de l'AGV (1) sur un parcours défini.

7. Un changeur d'outil automatique utilisant un AGV comme transporteur selon la revendication 6, comprenant en outre un module de commande (2) ; dans lequel le module de commande peut recevoir un premier signal, et commander à l'unité de mouvement axial NC (3) d'ajuster la position et/ou l'angle du module de changement d'outil sur la position standard et/ou à l'angle défini en fonction du premier signal sous des conditions définies.

8. Un changeur d'outil automatique utilisant un AGV comme transporteur selon la revendication 7, dans lequel le module de navigation (9) est intégré au module de commande (2).

9. Un changeur d'outil automatique utilisant un AGV comme transporteur selon la revendication 6 ou 7, dans lequel le module de navigation (9) réalise une fonction de navigation via un élément au sein d'un groupe composé de la navigation laser, de la navigation magnétique, de la navigation optique et de la navigation inertielle.
